# EUROPEAN PATENT SPECIFICATION

(11) **EP 2 777 059 B1**
(45) Date of publication and mention of the grant of the patent: **02.02.2022**
(21) Application number: 12813371.7
(22) Date of filing: 21.12.2012
(51) Int. Cl.: H01H 33/59, H01H 9/54, H02J 3/36, H02H 7/26

(54) **HYBRID DC CIRCUIT BREAKING DEVICE**
GLEICHSTROM-SCHNELLSCHALTEINRICHTUNG
DISJONCTEUR HYBRIDE POUR COURANT CONTINU

(30) Priority: 22.12.2011 US 201161579336 P; 28.08.2012 US 201261693842 P
(43) Date of publication of application: 17.09.2014
(73) Proprietor: Siemens Energy Global GmbH & Co. KG, 81739 München (DE)
(72) Inventor: MOHADDES, Mojtaba, Winnipeg, Manitoba R3P 2G5 (CA)
(86) International application number: PCT/EP2012/076782
(87) International publication number: WO 2013/093066

(56) References cited:
- WO-A1-2011/057675
- WO-A1-2011/141428
- US-A- 3 781 606
- US-A- 5 517 378
- US-A- 5 666 257

## Description

### FIELD OF THE INVENTION

The present invention relates to a hybrid type dc circuit breaking device comprising a breaker circuit having serially connected mechanical and electronic switches and a capacitor in parallel with the serially connected switches; and more particularly the present invention relates to possible use of the breaker circuit in combination with one or more varistors to stop or allow the flow of dc current in an electric circuit. Moreover, this invention comprises the fast discharge circuit to allow for fast reclose of the dc breaker.

### BACKGROUND

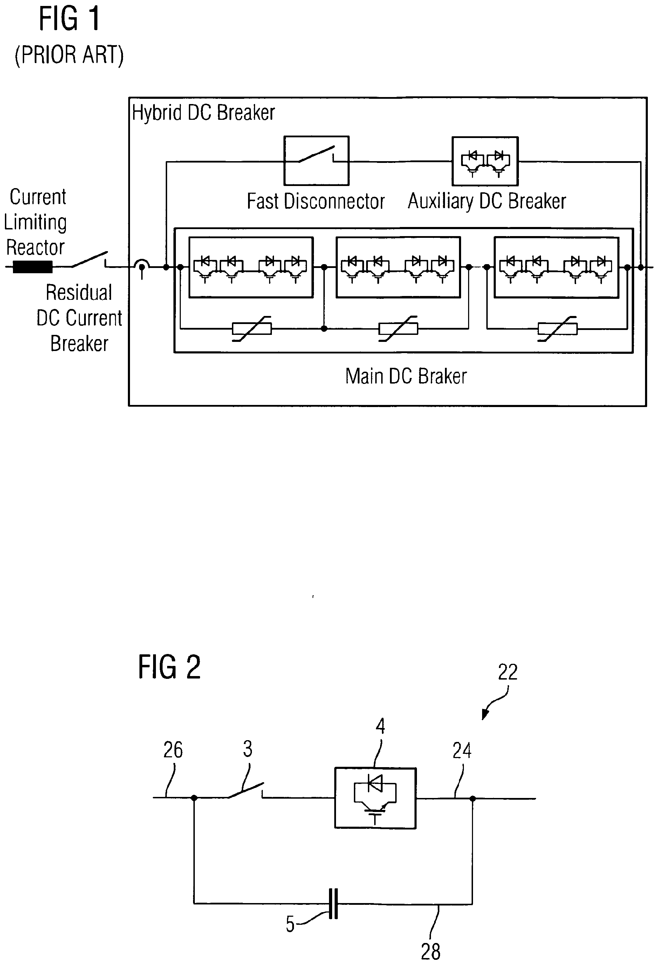

A prior art Hybrid dc Circuit breaker as shown in Figure 1 is described in the publication "Protective Hybrid HVdc Breakers - A Key Innovation for Reliable HVdc Grids," by Jurgen Hafner and Bjorn Jacobson in CIGRE International Symposium, Bologna, Italy, Sept. 13-15, 2011, which is incorporated herein by reference. More particularly in the publication a hybrid dc breaker is disclosed consisting of a mechanical fast disconnector, an electronic auxiliary dc breaker and an electronic main dc breaker as shown in Figure 1. During the normal operation the fast disconnector, the auxiliary dc breaker and the residual dc current breaker are closed and the main dc breaker is open. The dc current flows through the residual dc current breaker, fast disconnector and the auxiliary dc breaker and current through the main dc breaker remains at almost zero. When the breaker is required to open the auxiliary dc breaker is ordered to open and the main dc breaker is ordered to close. This will commutate the current to the main dc breaker in a very short time, normally a fraction of a millisecond. At the same time the mechanical fast disconnector is ordered to open. The mechanical fast disconnector opens at zero current as the dc current is already commutated to the main dc breaker. Once the mechanical fast disconnector is in open position the main dc breaker breaks the current. The hybrid dc breaker is able to break fault currents in a short time and has low losses when it is closed. The hybrid dc breaker described above offers an acceptable breaking time for most applications and reasonably low losses, however it requires an electronic main dc breaker. The main dc breaker must have a voltage rating higher than the rated voltage of the dc circuit. It may also be required that the main dc breaker be able to break the dc current in either direction, which will add to the complexity of its design and increase the number of its components. Document WO 2011/141428 A1 discloses such a circuit breaking device comprising a primary and a secondary current paths, an electronic breaker switch connected in series with a mechanical interrupter switch in the primary current path and a capacitor in the secondary curent path.

### SUMMARY OF THE INVENTION

The present invention is similar to the above mentioned hybrid dc breaker in using a mechanical switch (which can be a fast disconnector) and an auxiliary electronic dc breaker, but it replaces the main dc breaker with a capacitor.

According to one aspect of the invention there is provided an arrangement according to claim 1.

Preferably a controller arranged to displace the mechanical switch into the open position immediately subsequent to opening of the electronic breaker switch. Alternatively the electronic breaker switch can be opened shortly after opening the mechanical switch.

In preferred embodiments the device also includes a tertiary current path connected in parallel with the primary current path and the secondary current path, and a varistor connected in the tertiary current path so as to be in parallel with the serially connected switches and in parallel with the capacitor.

When the primary current path and the secondary current path define a breaker circuit in series with the main current path, the device may further comprise an auxiliary current path connected in parallel with the first dc circuit in which the auxiliary current path includes an auxiliary varistor connected in series therewith.

The device may further include a second auxiliary current path in parallel with the second dc circuit and a third varistor connected in the second auxiliary current path so as to be in parallel with the second dc circuit.

The device may further comprise an auxiliary interrupter switch connected in series between the breaker circuit and either one of the first and second dc circuits.

The device may further include a fourth current path connected in parallel to the primary and secondary current paths.

The fourth current path preferably comprises a series connected switch and a damping circuit. The damping circuit may comprise a damping resistor and a damping inductor in which the resistor and the inductor are connected in parallel to each other and together in series with the switch.

Alternatively the damping circuit may comprise a damping resistor connected in series with a spark gap and a damping inductor connected in parallel to the serially connected damping resistor and spark gap.

The switch can be mechanical, electronic, spark gap, plasma injection, vacuum tube or any other device or combination of devices that is capable of closing the circuit upon receiving a command signal and opening the circuit either by a command signal or when its current or voltage is reduced below a threshold level.

The electronic breaker switch may comprise a solid state semiconductor based circuit breaker or a vacuum tube circuit breaker capable of interrupting current either in only one direction or in both directions. Various embodiments of the invention will now be described in conjunction with the accompanying drawings in which:

### BRIEF DESCRIPTION OF THE DRAWINGS

Figure 1 is a schematic representation of a prior art dc circuit breaking device including a hybrid of mechanical and electrical breakers.
Figure 2 is a schematic representation of a dc circuit breaking device including a hybrid of mechanical and electrical breakers.
Figure 3 is a schematic representation of the dc circuit breaking device of Figure 2 with an additional tertiary current path and varistor in connection with two dc circuits.
Figure 4 is a graphical representation of the dissipation of current and voltage in response to opening of the dc circuit breaking device in Figure 3.
Figure 5 is a schematic representation of the dc circuit breaking device of Figure 3 in connection with two dc circuits with an additional auxiliary current path and an auxiliary varistor.
Figure 6 is a graphical representation of the dissipation of current and voltage in response to opening of the dc circuit breaking device in Figure 5.
Figure 7 is a schematic representation of the dc circuit breaking device of Figure 3 in connection with two dc circuits with two additional auxiliary current paths and auxiliary varistors.
Figure 8 is a graphical representation of the dissipation of current and voltage in response to opening of the dc circuit breaking device in Figure 7.
Figure 9 is a schematic representation of the dc circuit breaking device of Figure 3 in connection with two dc circuits with additional auxiliary current paths and varistors and an additional auxiliary interrupter switch.
Figure 10 is a graphical representation of the dissipation of current and voltage in response to opening of the dc circuit breaking device in Figure 9.
Figure 11 is a schematic representation of the dc circuit breaking device of Figure 9 in connection with two dc circuits with additional fourth current path comprising a switch and damping circuit consisting of a resistor and an inductor.
Figure 12 is a graphical representation of the dissipation of current and voltage in response to opening of the dc circuit breaking device in Figure 11 and the reclose process which consists of discharging the capacitor 5 by closing switch 37 and then closing the mechanical switch 3 and the electronic switch 4 when the voltage across capacitor 5 is sufficiently low.

In the drawings like characters of reference indicate corresponding parts in the different figures.

### DETAILED DESCRIPTION

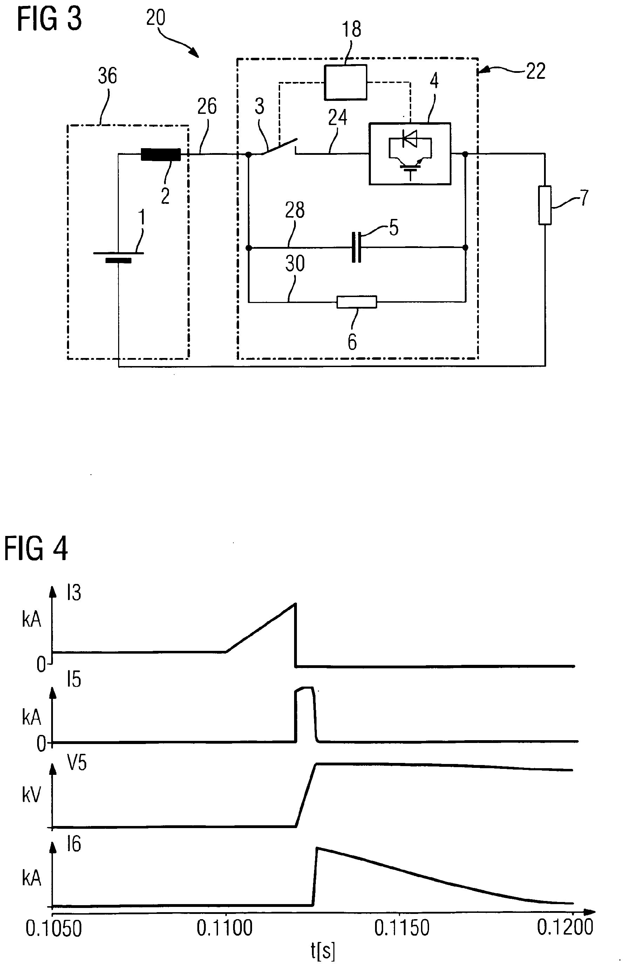

Referring to the accompanying figures, there is illustrated a circuit breaking device generally indicated by reference numeral 20. The device 20 is particularly suited for use in series with the main current path 26 between a first direct current (dc) circuit 36 and a second (dc) circuit 7 in which the first and second dc circuits 36 and 7 generally include and any bus bars, overhead transmission lines, cables, reactors, breakers, converters or any other components which may be related. In the example graphical representations of Figures 4, 6, 8,10 and 12 generated by computer simulation the dc circuit 36 is assumed to consist of the ideal dc voltage source 1 and the inductor 2, however in general the dc circuit 36 can consist of any other components as mentioned.

Although various embodiments are described, the common features of the various embodiments will first be addressed.

The device 20 generally includes a breaker circuit 22 represented in Figure 2. The circuit 22 includes a primary current path 24 which is arranged to be connected to the main current path 26 connecting the first dc circuit 36 and the second dc circuit 7. The breaker circuit 22 also includes a secondary current path 28 which is connected in parallel with the primary current path such that the primary and secondary current paths are together parallel connected and collectively form the breaker circuit in series with the main current path between the first dc circuit 36 and the second dc circuit 7.

A mechanical interrupter switch 3 is connected in the primary current path 24 in series therewith. Contacts of the mechanical interrupter switch are arranged to be moveable relative to one another between a closed position arranged to conduct current therethrough flowing through the primary current path, and an open position in which the primary current path is opened such that the current flowing therethrough is broken.

An electronic breaker switch 4 is also connected in series with the mechanical interrupter switch 3 in the primary current path 24. The electronic breaker switch 4 is a solid state semi-conductor type breaker which is readily operable from a closed state to an open state upon receipt of an electronic opening signal from a suitable controller 18. In the closed state, the electronic breaker switch is arranged to conduct current flowing through the primary current path. In the open state the switch is arranged to break current flowing therethrough. A rated voltage of the electronic breaker switch is lower than the rated voltage of the dc circuits 7 and 36.

The breaker circuit 22 further includes a capacitor 5 connected in the secondary current path 28 so as to be in parallel with the serially connected mechanical interrupter switch 3 and electronic breaker switch 4.

The controller 18 of the electronic breaker switch is also arranged to order the interrupter switch 3 to be mechanically displaced from the closed position into the open position immediately subsequent to opening of the electronic breaker switch by sending the electronic opening signal to this switch.

In the first embodiment of Figure 3, the device 20 further includes a tertiary current path 30 which is connected in parallel with the primary current path 24 and the secondary current path 28 and also forms part of the collective breaker circuit 22 connected in series with the main current path 26. In this instance, a first varistor 6 is connected in the tertiary current path so as to be parallel with the serially connected switches 3 and 4 and in parallel with the capacitor 5.

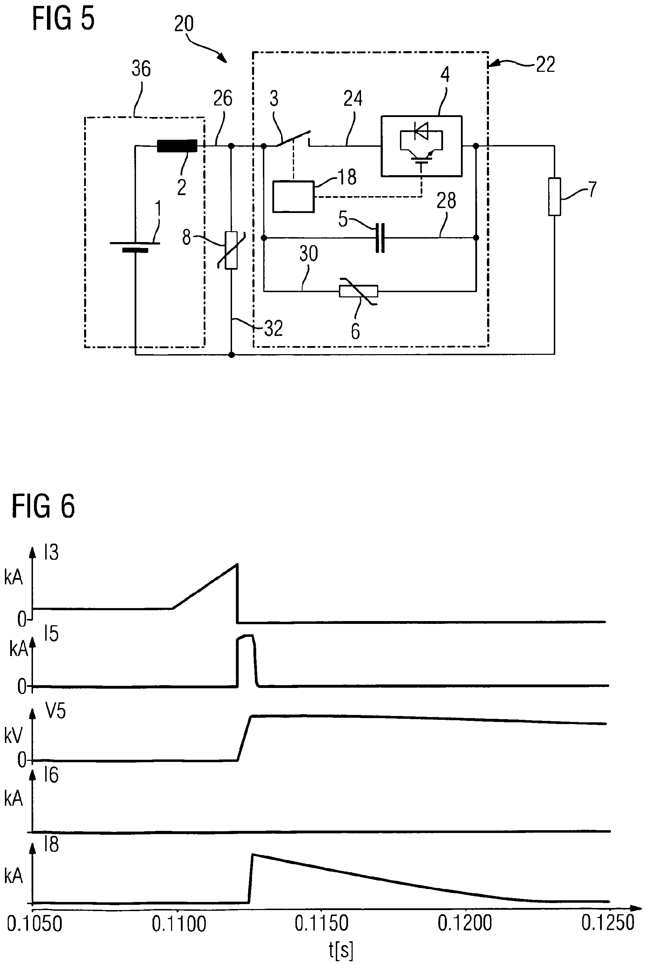

According to a second embodiment shown in Figure 5, the device 20 also includes an auxiliary current path 32. In this instance, where the primary, secondary and tertiary current paths collectively define the breaker circuit 22 in series with the dc circuit 7, the auxiliary current path 32 is connected in parallel with the dc circuit 36. A second varistor 8 can then be connected in series with the auxiliary current path 32 so as to be connected in parallel with the main current path serially connecting the breaker circuit 22 and the dc circuit 7.

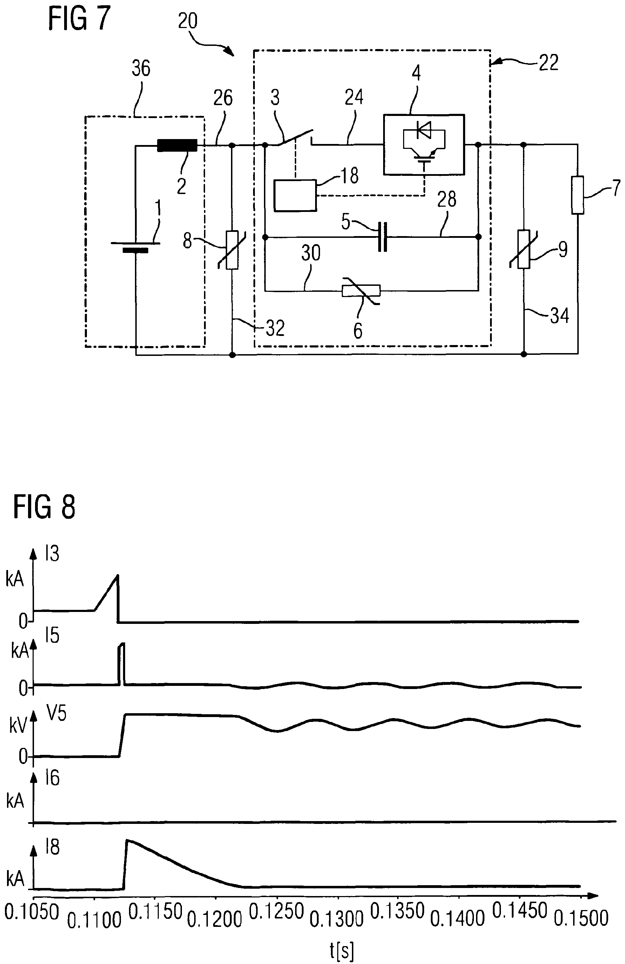

According to a third embodiment shown in Figure 7, the device 20 includes all of the features of the previous embodiment together with an additional auxiliary current path 34 connected in parallel with the dc circuit 7. In this arrangement, the auxiliary current path 34 and parallel connected dc current 7 are collectively connected in series with the breaker circuit 22. A third varistor 9 is connected in series with the auxiliary current path 34 such that the third varistor is in parallel with the second dc circuit 7 and the collective parallel connection of the third varistor and the second dc circuit 7 is in series between the breaker circuit 22 and the return path of the second dc circuit 7 to the first dc circuit 36.

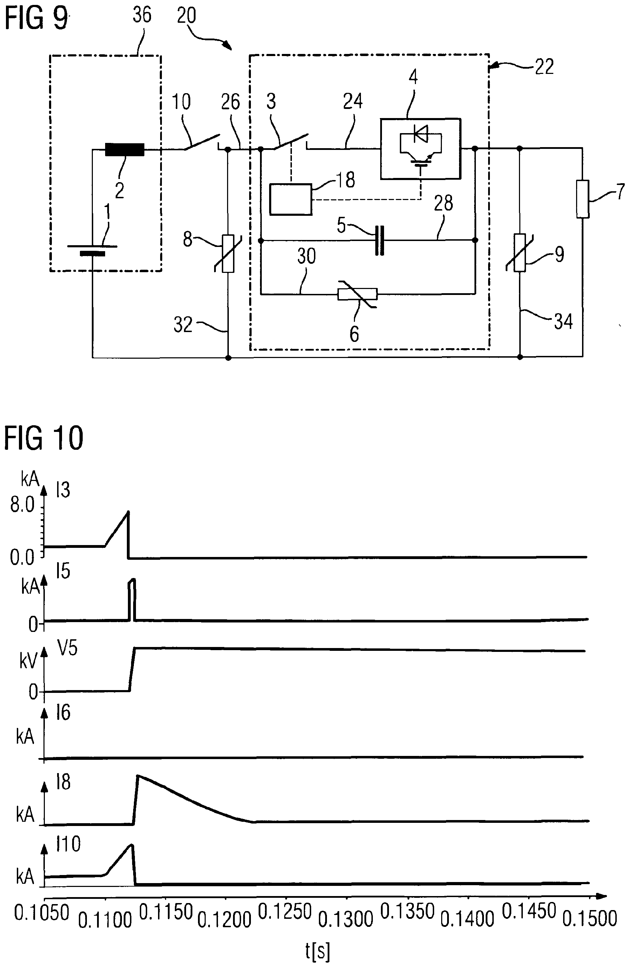

Turning now to a fourth embodiment as shown in Figure 9, in this instance, the device 20 includes all of the features of the previous embodiment along with an additional auxiliary interrupter switch 10 connected in series with the main current path between the first dc circuit 36 and the breaker circuit 22. Alternatively the auxiliary interrupter switch 10 may be connected in series with the main current path 26 on the opposite side of the breaker circuit 22 between the breaker circuit 22 and the second dc circuit 7. The auxiliary current path 32 connects in parallel with the main current path between the dc circuit 36 and the auxiliary interrupter switch 10.

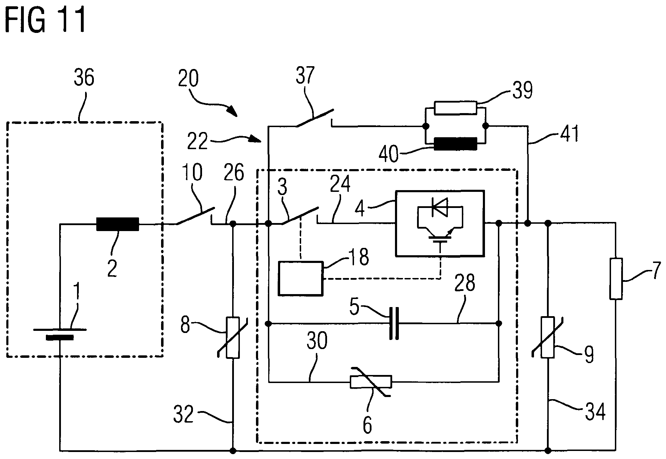

In the fifth embodiment as shown in Figure 11, the device 20 includes all of the features of the previous embodiments with an additional fourth current path 41 defining a supplementary current path connected in parallel to the primary current path 24 and the secondary current path 28 and the tertiary current path 30 so that they are collectively in series with the main current path 26.

A damping resistor 39 and a damping inductor 40 are connected in parallel to each other and collectively define a damping circuit which is connected in series to the fourth current path 41.

Additionally a switch 37 is connected in series with the fourth current path 41 and the damping circuit formed by the parallel combination of the damping resistor 39 and the damping inductor 40. The switch 37 can be mechanical, electronic, spark gap, plasma injection, vacuum tube or any other device or combination of devices that is capable of closing the circuit upon receiving a command signal and opening the circuit either by a command signal or when its current or voltage is reduced below a threshold level.

Alternatively the damping circuit may consist of a damping resistor 39 connected in series with a spark gap and a damping inductor 40 connected in parallel to the series combination of the damping resistor and the spark gap.

The functioning of the various embodiments described above will now be described in further detail. As described above, Figure 3 shows an electric circuit consisting of a first dc circuit 36, a mechanical interrupter switch 3, an electronic breaker switch 4, a capacitor 5, a varistor 6 and the remaining parts of the dc circuit schematically shown as block 7. In this case the first dc circuit 36 consists of a source of dc current 1 and an inductor 2 that represents the inductance present in the circuit, however in general the first dc circuit 36 can consist of any busbars, overhead transmission lines, cables, reactors, breakers, converters or any other components.

The source 1 can be a battery, a dc generator or any kind of electronic ac to dc converter. The reactor 2 represents the total inductance present between the source and the breaker. This includes any physical inductor and the inductance of the busbars, conductors and any stray inductances.

The mechanical switch 3 can be a circuit breaker, a load switch or a fast disconnector. This mechanical switch will open at near zero dc voltage and current. The electronic breaker 4 is an electronic switch made of IGBT's, GTO's, GeT's, electron tubes or any other electronic components that is capable of being turned on and off by an electronic signal. The voltage rating of the auxiliary breaker 4 is lower than the rated voltage of the dc circuit. If the hybrid dc circuit breaker is required to break the dc current in both directions, the auxiliary electronic breaker must be capable of blocking current in both directions. The remaining parts of the dc circuit including any busbars, overhead transmission lines, cables, reactors, breakers, converters or any other components are schematically shown as block 7.

The current breaking principle of the new hybrid dc breaker circuit 22 is explained here with reference to Figure 3. When the hybrid dc breaker is closed the mechanical switch 3 is closed and the electronic breaker 4 is conducting. The voltage across the capacitor 5 is equal to the voltage drop across the mechanical switch 3 plus the electronic breaker 4. Normally this voltage is very small compared to the rated voltage of the dc circuit. When the hybrid dc breaker is required to open a "turn off' order is sent to the electronic breaker 4. Within a short time before or after the electronic breaker 4 the mechanical switch 3 is also ordered to open. As a result of the "turn off' order to the electronic breaker the resistance of this device is increased, which will cause the dc current to be commutated to the capacitor 5. The capacitor voltage will start to rise at a rate related to its capacitance and the dc current intensity. The current flow through the mechanical switch 3 is reduced to nearly zero, which
permits this device to open without any significant arcing. The voltage across the capacitor 5 will continue to rise until the current flow is stopped. The varistor 6 protects capacitor 5 from an overvoltage. Figure 4 shows the current and voltage waveforms for an example ease where a short circuit occurs between the dc conductors at a point between the hybrid de breaker 22 and the rest of the de circuit 7.

When the short circuit occurs the dc current through mechanical switch 3 rises at a rate determined by the source 1 and the inductance 2. The first graph 1_3 in Figure 4 shows the current through the mechanical switch 3. As explained above shortly after the hybrid breaker is ordered to open the electronic breaker 4 is turned off causing the current to be commutated to the capacitor 5. This will cause the capacitor voltage V_5 to grow up to the knee voltage of the varistor 6. At this point varistor starts conducting and V_5 remains almost constant. The varistor knee voltage is higher than the voltage of the de source 1 by design, therefore the polarity of the voltage across the inductor 2 is such that the de current is diminished. In Figure 4 - 3 is the current through the mechanical switch 3, 1_5 is the current through the capacitor 5, 1_6 is the current through the varistor 6 and V_5 is the voltage across the capacitor 5.

As shown in the example above, in the hybrid dc breaker shown in Figure 3 some current may flow through the varistor 6 toward the dc circuit 7 for some time after the mechanical switch 3 was opened. The magnitude and duration of this current depends on the parameters such as the capacitance of the capacitor 5, the inductance of the reactor 2 and the knee voltage of the varistor 6. The flow of the current through the varistor after opening the breaker may not be acceptable in some applications. Figure 5 shows a variation of the hybrid dc circuit breaker where a varistor 8 is added to the circuit. The knee voltage for varistor 8 is selected below the knee voltage for the varistor 6. Figure 6 shows the simulation results for a short circuit event similar to the case shown in Figure 4. In Figure 6 all current and voltage designations are similar to Figure 4, the new trace L8 represents the current through the varistor 8. Figure 6 shows that the current through the varistor 6 is reduced to almost zero in this arrangement.

The hybrid dc breaker can be designed to break the current in both directions as explained earlier. In this case for a short circuit fault that occurs at a point on the circuit between the hybrid dc breaker and the first dc circuit 36, or within the first dc circuit 36, the behaviour of the hybrid dc breaker is similar to the previous cases discussed above. The rate of rise for the fault current will depend on the inductance of the complete fault current path in this case. Similar to the previous example the flow of current through the varistor 6 may not be acceptable in some applications. A variation of the hybrid dc breaker shown in Figure 7 will reduce the current flow through varistor 6 to almost zero following a fault on either side of the breaker.

Depending on the characteristics of the first dc circuit 36 and the second dc circuit 7 and the location of the fault, when the hybrid dc breaker is ordered to open the current through the capacitor 5 may oscillate a number of times before settling at zero. Figure 8 shows an example of such possible situation. The flow of oscillatory current through the hybrid dc breaker's capacitor may not be acceptable in some applications. An embodiment of the dc hybrid breaker with an additional auxiliary interrupter switch 10 as shown in Figure 9 is capable of avoiding such oscillatory currents. When the hybrid dc breaker is required to open the auxiliary interrupter switch 10 is ordered to open as well as the mechanical switch 3 and the electronic breaker 4. The residual breaker completely stops the dc current as soon as its current reach zero. Figure 10 shows the same example simulation case shown in Figure 8, but with the embodiment of the hybrid dc breaker shown in Figure 9.

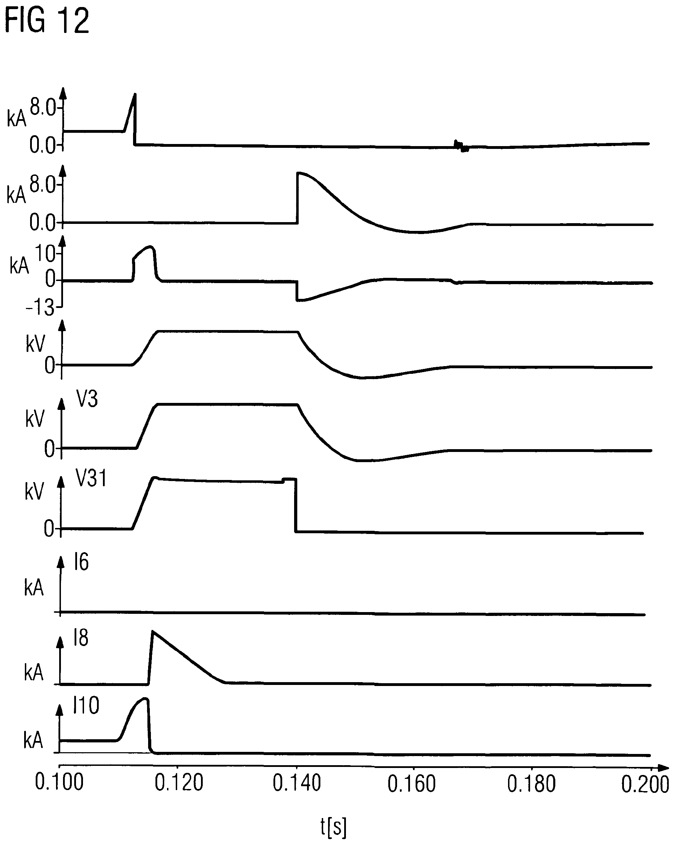

Some applications may require a fast reclose of the dc circuit breaker to resume the flow of the dc current. The fifth embodiment shown in Figure 11 allows a fast discharge of the capacitor 5 and reclosing of the mechanical interrupter switch 3 and electronic breaker switch 4. Figure 12 shows a computer simulation example of the open and reclose procedure for the hybrid dc circuit breaker. The process of opening the dc breaker is similar to the process described in connection to the forth embodiment and the simulation example shown in Figure 10. At the end of this process the capacitor 5 is charged to the voltage V_5 as shown in Figure 12. When a fast reclose is required the switch 37 is ordered to close. This will provide a path for capacitor 5 to discharge through the damping resistor 39 and the damping inductor 40. The resistance and inductance of these elements are selected such that the capacitor 5 is discharged within the required time. Once the capacitor voltage and current are below acceptable threshold the mechanical interrupter switch 3 and electronic breaker switch 4 are ordered to close and the current flow through the breaker is resumed.

## Claims

1. An arrangement comprising
- a first DC circuit (36) with a first connection node and a second connection node;
- a circuit breaking device (20) with a first connection node and a second connection node, wherein the circuit breaking device (20) is adapted to brake a DC component in the current path between its first and second connection nodes, and wherein the first connection node of the first DC circuit (36) is connected to the first connection node of the circuit breaking device (20);
- a second DC circuit (7) with a first connection node and a second connection node the first connection node of the second DC circuit (7) being connected to the second connection node of the circuit breaking device (20), while the second connection node of the second DC circuit (7) is connected to the second connection node of the first DC circuit (36);
said circuit breaking device (20) comprising
- a mechanical interrupter switch (3) having contacts movable relative to each other between a closed position arranged to conduct current flowing there through and an open position arranged to break a current flowing there through;
- an electronic breaker switch (4) connected in series with the mechanical interrupter switch (3) between the first and second connection nodes of the circuit breaking device, the electronic breaker switch being operable to open from a closed state arranged to conduct current flowing there through to an open state arranged to break a current flowing there through upon receipt of an electronic opening signal;
- a capacitor (5) connected in parallel to the serially connected mechanical interrupter switch (3) and the electronic breaker switch (4);
- a first varistor (6) connected in parallel to both the capacitor (5) and the serially connected mechanical interrupter switch (3) and the electronic breaker switch (4); and
- a second varistor (8) connected in parallel to the first DC circuit (3) between the first and second connection nodes of the first DC circuit (3), wherein
- a knee voltage of the second varistor (8) being less than a knee voltage of the first varistor (6).

2. The arrangement according to Claim 1 wherein a rated voltage of the electronic breaker switch (4) is lower than a rated voltage of the first (36) and second dc circuits (7).

3. The arrangement according to either one of Claims 1 or 2 further comprising a controller (18) arranged to order the electronic breaker switch (4) to open or close and to displace the mechanical switch (3) into the open position immediately subsequent to opening of the electronic breaker switch (4).

4. The arrangement according to any one of Claims 1 through 3 further comprising a tertiary current path (30) connected in parallel, with a primary current path (24) and a secondary current path (28), and a varistor (6) connected in the tertiary current path (30) so as to be in parallel with the serially connected switches (3,4) and in parallel with the capacitor (5).

5. The arrangement according to Claim 4 wherein the primary current path (24) and the secondary current path (28) define a breaker circuit (22) in series with the main current path (26), and wherein the device further comprises an auxiliary current path (32) connected in parallel with the first dc circuit (36), the auxiliary current path (32) including a varistor (8) connected in series therewith.

6. The arrangement according to any one of Claims 4 through 5 wherein the primary current path (24) and the secondary current path (28) define a breaker circuit (22) in series with the main current path (26), and wherein the device further comprises:
- a tertiary current path (30) connected in parallel with the primary current path (24) and the secondary current path (28) ;
- a first varistor (6) connected in the tertiary current path (30) so as to be in parallel with the serially connected switches (3,4) and in parallel with the capacitor (5);
- a first auxiliary current (32) path connected in parallel with the first dc circuit (36);
- a second varistor (8) connected in the first auxiliary current path (32);
- a second auxiliary current path (34) connected in parallel with the second dc circuit (7); and
- a third varistor (9) connected in the second auxiliary current path (34).

7. The arrangement according to any one of Claims 4 through 6 wherein the primary current path (24) and the secondary current path (28) define a breaker circuit (22) in series with the main current path (26), and wherein the device further comprises:
- an auxiliary interrupter switch (10) connected in series between the breaker circuit (22) and one of the first (36) and second dc circuits (7).

8. The arrangement according to any one of Claims 1 through 7 wherein the electronic breaker switch (4) comprises a solid state semiconductor based circuit breaker capable of interrupting current in only one direction.

9. The arrangement according to any one of Claims 1 through 7 wherein the electronic breaker switch (4) comprises a solid state semiconductor based circuit breaker capable of interrupting current in both directions.

10. The arrangement according to any one of Claims 1 through 7 wherein the electronic breaker switch (4) comprises a vacuum tube circuit breaker capable of interrupting current in only one direction.

11. The arrangement according to any one of Claims 1 through 7 wherein the electronic breaker switch (4) comprises a vacuum tube circuit breaker capable of interrupting current in both directions.

12. The arrangement according to any one of Claims 4 through 11 further comprising:
- a supplementary current path (41) connected in parallel with the primary current path (24) and the secondary current path (28);
- a damping circuit (39,40) connected in the supplementary current path (41); and
- a supplementary switch (37) connected in series with the damping circuit (39,40) in the supplementary current path (41) in which the switch (37) is operable between a closed state arranged to conduct current flowing therethrough and an open state arranged to break a current flowing therethrough.

13. The arrangement according to Claim 12 wherein the damping circuit comprises a damping resistor (39) and a damping inductor (40) connected in parallel with one another.

14. The arrangement according to Claim 12 wherein the damping circuit comprises a damping resistor (39) connected in series with a spark gap and a damping inductor (40) connected in parallel to the serially connected damping resistor (39) and spark gap.

## Patentansprüche

1. Anordnung, die Folgendes umfasst:
- eine erste Gleichstromschaltung (36) mit einem ersten Verbindungsknoten und einem zweiten Verbindungsknoten;
- eine Schaltungsunterbrechungsvorrichtung (20) mit einem ersten Verbindungsknoten und einem zweiten Verbindungsknoten, wobei die Schaltungsunterbrechungsvorrichtung (20) ausgelegt ist, eine Gleichstromkomponente in dem Stromweg zwischen ihrem ersten und ihrem zweiten Verbindungsknoten zu unterbrechen, und wobei der erste Verbindungsknoten der ersten Gleichstromschaltung (36) mit dem ersten Verbindungsknoten der Schaltungsunterbrechungsvorrichtung (20) verbunden ist;
- eine zweite Gleichstromschaltung (7) mit einem ersten Verbindungsknoten und einem zweiten Verbindungsknoten, wobei der erste Verbindungsknoten der zweiten Gleichstromschaltung (7) mit dem zweiten Verbindungsknoten der Schaltungsunterbrechungsvorrichtung (20) verbunden ist, während der zweite Verbindungsknoten der zweiten Gleichstromschaltung (7) mit dem zweiten Verbindungsknoten der ersten Gleichstromschaltung (36) verbunden ist;
wobei die Schaltungsunterbrechungsvorrichtung (20) Folgendes umfasst:
- einen mechanischen Unterbrecherschalter (3) mit Kontakten, die zwischen einer geschlossenen Position, die ausgelegt ist, einen dort hindurch fließenden Strom zu leiten, und einer offenen Position, die ausgelegt ist, einen dort hindurch fließenden Strom zu unterbrechen, relativ zueinander beweglich sind;
- einen elektronischen Unterbrecherschalter (4), der zwischen dem ersten und dem zweiten Verbindungsknoten der Schaltungsunterbrechungsvorrichtung mit dem mechanischen Unterbrecherschalter (3) in Reihe geschaltet ist, wobei der elektronische Unterbrecherschalter betreibbar ist, sich aufgrund des Empfangs eines elektronischen Öffnungssignals aus einem geschlossenen Zustand, der ausgelegt ist, einen dort hindurch fließenden Strom zu leiten, in einen offenen Zustand, der ausgelegt ist, einen dort hindurch fließenden Strom zu unterbrechen, zu öffnen;
- einen Kondensator (5), der zu der Reihenschaltung aus mechanischem Unterbrecherschalter (3) und elektronischem Unterbrecherschalter (4) parallel geschaltet ist;
- einen ersten Varistor (6), der sowohl zu dem Kondensator (5) als auch zu der Reihenschaltung aus mechanischem Unterbrecherschalter (3) und elektronischem Unterbrecherschalter (4) parallel geschaltet ist; und
- einen zweiten Varistor (8), der zwischen dem ersten und dem zweiten Verbindungsknoten der ersten Gleichstromschaltung (3) zur ersten Gleichstromschaltung (3) parallel geschaltet ist, wobei
- eine Kniepunktspannung des zweiten Varistors (8) kleiner als eine Kniepunktspannung des ersten Varistors (6) ist.

2. Anordnung nach Anspruch 1, wobei eine Nennspannung des elektronischen Unterbrecherschalters (4) niedriger als eine Nennspannung der ersten (36) und der zweiten (7) Gleichstromschaltung ist.

3. Anordnung nach Anspruch 1 oder Anspruch 2, die ferner eine Steuereinheit (18) umfasst, die ausgelegt ist, den elektronischen Unterbrecherschalter (4) anzuweisen, zu öffnen oder zu schließen, und den mechanischen Schalter (3) unmittelbar anschließend an das Öffnen des elektronischen Unterbrecherschalters (4) in die offene Position zu verlagern.

4. Anordnung nach einem der Ansprüche 1 bis 3, die ferner einen tertiären Stromweg (30), der zu einem primären Stromweg (24) und einem sekundären Stromweg (28) parallel geschaltet ist, und einen Varistor (6), der im tertiären Stromweg (30) derart geschaltet ist, dass er zu den in Reihe geschalteten Schaltern (3, 4) parallel ist und zum Kondensator (5) parallel ist, umfasst.

5. Anordnung nach Anspruch 4, wobei der primäre Stromweg (24) und der sekundäre Stromweg (28) eine Unterbrecherschaltung (22) in Reihe mit dem Hauptstromweg (26) definieren und wobei die Vorrichtung ferner einen Hilfsstromweg (32) umfasst, der zu der ersten Gleichstromschaltung (36) parallel geschaltet ist, wobei der Hilfsstromweg (32) einen dazu in Reihe geschalteten Varistor (8) enthält.

6. Anordnung nach einem der Ansprüche 4 bis 5, wobei der primäre Stromweg (24) und der sekundäre Stromweg (28) eine Unterbrecherschaltung (22) in Reihe mit dem Hauptstromweg (26) definieren und wobei die Vorrichtung ferner Folgendes umfasst:
- einen tertiären Stromweg (30), der zu dem primären Stromweg (24) und zu dem sekundären Stromweg (28) parallel geschaltet ist;
- einen ersten Varistor (6), der im tertiären Stromweg (30) derart geschaltet ist, dass er zu den in Reihe geschalteten Schaltern (3, 4) parallel ist und zu dem Kondensator (5) parallel ist;
- einen ersten Hilfsstromweg (32), der zu der ersten Gleichstromschaltung (36) parallel geschaltet ist;
- einen zweiten Varistor (8), der in den ersten Hilfsstromweg (32) geschaltet ist;
- einen zweiten Hilfsstromweg (34), der zu der zweiten Gleichstromschaltung (7) parallel geschaltet ist; und
- einen dritten Varistor (9), der in den zweiten Hilfsstromweg (34) geschaltet ist.

7. Anordnung nach einem der Ansprüche 4 bis 6, wobei der primäre Stromweg (24) und der sekundäre Stromweg (28) eine Unterbrecherschaltung (22) in Reihe mit dem Hauptstromweg (26) definieren und die Vorrichtung ferner Folgendes umfasst:
- einen Hilfsunterbrecherschalter (10), der zwischen der Unterbrecherschaltung (22) und entweder der ersten (36) oder der zweiten (7) Gleichstromschaltung in Reihe geschaltet ist.

8. Anordnung nach einem der Ansprüche 1 bis 7, wobei der elektronische Unterbrecherschalter (4) einen Leistungsschalter auf Festkörperhalbleiter-Basis, der einen Strom lediglich in einer Richtung unterbrechen kann, umfasst.

9. Anordnung nach einem der Ansprüche 1 bis 7, wobei der elektronische Unterbrecherschalter (4) einen Leistungsschalter auf Festkörperhalbleiter-Basis, der einen Strom in beiden Richtungen unterbrechen kann, umfasst.

10. Anordnung nach einem der Ansprüche 1 bis 7, wobei der elektronische Unterbrecherschalter (4) einen Vakuumröhren-Leistungsschalter, der einen Strom lediglich in einer Richtung unterbrechen kann, umfasst.

11. Anordnung nach einem der Ansprüche 1 bis 7, wobei der elektronische Unterbrecherschalter (4) einen Vakuumröhren-Leistungsschalter, der einen Strom in beiden Richtungen unterbrechen kann, umfasst.

12. Anordnung nach einem der Ansprüche 4 bis 11, die ferner Folgendes umfasst:
- einen Ergänzungsstromweg (41), der zu dem primären Stromweg (24) und zum sekundären Stromweg (28) parallel geschaltet ist;
- eine Dämpfungsschaltung (39, 40), die in den Ergänzungsstromweg (41) geschaltet ist; und
- einen Ergänzungsschalter (37), der im Ergänzungsstromweg (41) zur Dämpfungsschaltung (39, 40) in Reihe geschaltet ist, wobei der Schalter (37) zwischen einem geschlossenen Zustand, der ausgelegt ist, einen dort hindurch fließenden Strom zu leiten, und einem offenen Zustand, der ausgelegt ist, einen dort hindurch fließenden Strom zu unterbrechen, betreibbar ist.

13. Anordnung nach Anspruch 12, wobei die Dämpfungsschaltung einen Dämpfungswiderstand (39) und eine Dämpfungsinduktivität (40), die parallel zueinander geschaltet sind, umfasst.

14. Anordnung nach Anspruch 12, wobei die Dämpfungsschaltung einen Dämpfungswiderstand (39), der mit einer Funkenstrecke in Reihe geschaltet ist, und eine Dämpfungsinduktivität (40), die zu der Reihenschaltung aus Dämpfungswiderstand (39) und Funkenstrecke parallel geschaltet ist, umfasst.

## Revendications

1. Montage comprenant
- un premier circuit (36) en courant continu ayant une première borne de connexion et une deuxième borne de connexion ;
- un dispositif (20) de coupure de circuit ayant une première borne de connexion et une deuxième borne de connexion, le dispositif (20) de coupure de circuit étant conçu pour freiner une composante de courant continu dans le trajet du courant, entre ses première et deuxième bornes de connexion et dans lequel la première borne de connexion du premier circuit (36) de courant continu est connectée à la première borne de connexion du dispositif (20) de coupure de circuit ;
- un deuxième circuit (7) de courant continu ayant une première borne de connexion et une deuxième borne de connexion, la première borne de connexion du deuxième circuit (7) de courant continu étant connectée à la deuxième borne de connexion du dispositif (20) de coupure de circuit, tandis que la deuxième borne de connexion du deuxième circuit (7) de courant continu est connectée à la deuxième borne de connexion du premier circuit (36) de courant continu ;
le dispositif (20) de coupure de circuit comprenant
- un interrupteur (3) mécanique rupteur ayant des contacts mobiles l'un par rapport à l'autre entre une position fermée, agencée pour conduire du courant y passant, et une position ouverte agencée pour couper un courant y passant ;
- un interrupteur (4) électronique de coupure monté en série avec l'interrupteur (3) mécanique rupteur entre la première et la deuxième bornes de connexion du dispositif de coupure de circuit, l'interrupteur électronique de coupure pouvant fonctionner pour s'ouvrir d'un état fermé agencé pour conduire du courant y passant à un état ouvert agencé pour couper du courant y passant après réception d'un signal électronique d'ouverture ;
- un condensateur (5) monté en parallèle à l'interrupteur (3) mécanique rupteur monté en série et à l'interrupteur (4) électronique de coupure ;
- une première varistance (6) montée en parallèle à la fois au condensateur (5) et à l'interrupteur (3) mécanique rupteur monté en série et à l'interrupteur (4) électronique de coupure ; et
- une deuxième varistance (8) montée en parallèle au premier circuit (3) de courant continu entre la première et la deuxième borne de connexion du premier circuit (3) de courant continu, dans lequel
- une tension de coude de la deuxième varistance (8) est plus petite qu'une tension de coude la première varistance (6).

2. Montage suivant la revendication 1, dans lequel une tension nominale de l'interrupteur (4) électronique de coupure est plus basse qu'une tension nominale du premier (36) et du deuxième circuit (7) de courant continu.

3. Montage suivant l'une des revendications 1 ou 2, comprenant en outre une commande (18) agencée pour donner instruction à l'interrupteur (4) électronique de coupure de s'ouvrir et se fermer et pour mettre l'interrupteur (3) mécanique dans la position ouverte, immédiatement après l'ouverture de l'interrupteur (4) électronique de coupure.

4. Montage suivant l'une quelconque des revendications 1 à 3, comprenant en outre un trajet (30) de courant tertiaire monté en parallèle à un trajet (24) de courant primaire et à un trajet (28) de courant secondaire et une varistance (6) montée dans le trajet (30) de courant tertiaire de manière à être en parallèle avec les interrupteurs (3, 4) montés en série et en parallèle avec le condensateur (5).

5. Montage suivant la revendication 4, dans lequel le trajet (24) de courant primaire et le trajet (2) de courant secondaire définissent un circuit (22) de coupure en série avec le trajet (26) de courant principal et dans lequel le dispositif comprend en outre un trajet (32) de courant auxiliaire monté en parallèle avec le premier circuit (36) de courant continu, le trajet (32) de courant auxiliaire ayant une varistance (8) montée en série.

6. Montage suivant l'une quelconque des revendications 4 à 5, dans lequel le trajet (24) de courant primaire et le trajet (28) de courant secondaire définissent un circuit (22) de coupure en série avec le trajet (26) de courant principal et dans lequel le dispositif comprend en outre :
- un trajet (30) de courant tertiaire monté en parallèle avec le trajet (24) de courant primaire et le trajet (28) de courant secondaire ;
- une première varistance (6) montée dans le trajet (30) de courant tertiaire de manière à être en parallèle avec les interrupteurs (3, 4) montés en série et en parallèle avec le condensateur (5) ;
- un premier trajet de courant (32) auxiliaire monté en parallèle avec le premier circuit (36) de courant continu ;
- une deuxième varistance (8) montée dans le premier trajet (32) de courant auxiliaire ;
- un deuxième trajet (34) de courant auxiliaire monté en parallèle avec le deuxième circuit (7) de courant continu ; et
- une troisième varistance (9) montée dans le deuxième trajet (34) de courant auxiliaire.

7. Montage suivant l'une quelconque des revendications 4 à 6, dans lequel le trajet (24) de courant primaire et le trajet (28) de courant secondaire définissent un circuit (22) de coupure en série avec le trajet (26) de courant primaire et dans lequel le dispositif comprend en outre :
- un interrupteur (10) auxiliaire rupteur monté en série entre le circuit (22) de coupure et l'un du premier (36) et du deuxième circuit (7) de courant continu.

8. Montage suivant l'une quelconque des revendications 1 à 7, dans lequel l'interrupteur (4) électronique de coupure comprend un dispositif de coupure de circuit à base d'un semi-conducteur apte à interrompre du courant dans seulement un sens.

9. Montage suivant l'une quelconque des revendications 1 à 7, dans lequel l'interrupteur (4) électronique de coupure comprend un dispositif de coupure de circuit à base d'un semi-conducteur apte à interrompre du courant dans les deux sens.

10. Montage suivant l'une quelconque des revendications 1 à 7, dans lequel l'interrupteur (4) électronique de coupure comprend un dispositif de coupure de circuit à tube à vide apte à interrompre du courant dans seulement un sens.

11. Montage suivant l'une quelconque des revendications 1 à 7, dans lequel l'interrupteur (4) électronique de coupure comprend un dispositif de coupure de circuit à tube à vide apte à interrompre du courant dans les deux sens.

12. Montage suivant l'une quelconque des revendications 4 à 11, comprenant en outre :
- un trajet (41) de courant supplémentaire monté en parallèle avec le trajet (24) de courant primaire et le trajet (28) de courant secondaire ;
- un circuit (39, 40) d'amortissement monté dans le trajet (41) de courant supplémentaire ; et
- un interrupteur (37) supplémentaire monté en série avec le circuit (39, 40) d'amortissement dans le trajet (41) de courant supplémentaire dans lequel l'interrupteur (37) peut fonctionner entre un état fermé agencé pour conduire du courant y passant et un état ouvert agencé pour interrompre un courant y passant.

13. Montage suivant la revendication 12, dans lequel le circuit d'amortissement comprend une résistance (39) d'amortissement et une inductance (40) d'amortissement montées en parallèle entre elles.

14. Montage suivant la revendication 12, dans lequel le circuit d'amortissement comprend une résistance (39) d'amortissement montée en série avec un éclateur et une inductance (40) d'amortissement montée en parallèle avec la résistance (39) montée en série et l'éclateur.
